# EUROPÄISCHE PATENTANMELDUNG

(11) **EP 1 450 503 A2**
(43) Veröffentlichungstag der Anmeldung: **25.08.2004**
(21) Anmeldenummer: 04003425.8
(22) Anmeldetag: 16.02.2004
(51) Int. Cl.: H04H 1/00

(54) **System und Verfahren zur elektronischen Übertragung und Abrechnung von Informationsdaten**

(30) Priorität: 19.02.2003 DE 10306975
(71) Anmelder: Vodafone Holding GmbH, 40213 Düsseldorf (DE)
(72) Erfinder: Rauch, Christian, 82418 Murnau (DE); Hirsch, Christina, 80331 München (DE)
(74) Vertreter: Müller, Thomas, Dipl.-Ing.

(57) **Zusammenfassung**

Es wird ein System zur elektronischen Übertragung und Abrechnung von kostenpflichtigen Informationsdaten, bei dem die Informationsdaten mittels eines zum System gehörigen digitalen, breitbandigen Übertragungskanals (Broadcast Kanal) vom Anbieter zum Endgerät eines Abnehmers übertragen werden sowie ein Verfahren zur elektronischen Übertragung und Abrechnung von kostenpflichtigen Informationsdaten mittels des genannten Systems, beschrieben, bei denen durch die Kombination der erfindungswesentlichen Merkmale des Systems und des Verfahrens es im Gegensatz zu herkömmlichen Pay-Informationssystemen nunmehr möglich, dass der potentielle Nutzer über eine mobile Anbindung dem Operator oder einem zwischengeschalteten Vermittlungs- und Abrechnungsdienst gezielt und kurzfristig Wünsche übermittelt, die die Benutzung bestimmter Pay-Informationsangebote betreffen und über eine bestehende Mobilfunkverbindung durch Übermittlung entsprechender Identifizierungsdaten eine eindeutige Zuordnung des aufzuwendenden Nutzungsentgeltes zu seinem Pay-Konto zu ermöglichen.

## Beschreibung

Die Erfindung betrifft ein System zur elektronischen Übertragung und Abrechnung von kostenpflichtigen Informationsdaten, bei dem die Informationsdaten mittels eines zum System gehörigen digitalen breitbandigen Übertragungskanals (Broadcast Kanal) vom Anbieter zum Endgerät eines Abnehmers übertragen werden sowie ein Verfahren zur elektronischen Übertragung und Abrechnung von kostenpflichtigen Informationsdaten mittels eines oben angeführten Systems.

Die Übertragung von Informationsdaten mittels eines digitalen breitbandigen Übertragungskanals, welcher üblicherweise als "Broadcast Kanal" bezeichnet wird, bietet auf Grund der hohen Bandbreite des Übertragungskanals vielfältige Möglichkeiten der Übertragung - insbesondere von TV- und/oder Musikdaten - und wird deshalb insbesondere bei tradtionnellen Pay-TV-Systemen genutzt. Bei derartigen Pay-TV-Systemen besitzt der berechtigte Nutzer der kostenpflichtigen über den Übertragungskanal verbreiteten Informationsdaten üblicherweise einen Digitalempfänger in Form einer so genannten Set-Top-Box, welche in der Lage ist, die im Rahmen der Übertragung verschlüsselten Informationsdaten zu decodieren und einem angeschlossenen TV- oder Musikgerät zur Ausgabe bereitzustellen. Die üblichen Pay-TV-Systeme nutzen dabei einen zusätzlichen Übertragungskanal zwischen der Set-Top-Box und dem Pay-TV Anbieter, über den man Nutzungsrechte bezüglich bestimmter Sendungen erwerben kann. Dieser Übertragungskanal ist üblicherweise als eine Modemverbindung an der Set-Top-Box angeschlossen, so dass ein Telefonanschluss in der Nähe der TV-Anlage notwendig ist. Da viele Haushalte nicht über entsprechende Telefonverkabelungen innerhalb ihrer Wohnung bzw. ihres Hauses verfügen, setzt die augenblickliche Praxis für den Erwerb von Pay-TV-Rechten an bestimmten Sendungen einer flächendeckenden Verbreitung derartiger Systeme nicht unbeträchtliche Hindernisse entgegen. Darüber hinaus erfordert die augenblickliche Praxis eine vertragliche Beziehung zwischen Pay-TV-Nutzer und Pay-TV-Anbieter, welche einer flexiblen Handhabung der Nutzungsrechte bzw. deren Erwerb entgegensteht.

Die Verwendung hybrider Übertragungsnetze ist darüberhinaus prinzipiell auch aus anderen Anwendungen bekannt. Das Übertragungsnetz bestehen dabei vorteilhaft aus wenigstens einem digitalen breitbandigen Übertragungskanal sowie wenigstens einem Datenkanal, über den Interaktionen stattfinden können (Interaktionskanal). Derartige hybride Übertragungsnetze sind bislang für Anbindungen bekannt, die im Zusammenhang mit der Übertragung von Informationsdaten in Form von Printmedieninhalten eingesetzt werden. Dabei werden digitale Printmedieninhalte über den digitalen breitbandigen Übertragungskanal von einer zentralen Rechnereinheit an das Endgerät eines berechtigten Nutzers übermittelt. Das Endgerät verfügt dabei über die Möglichkeit, mit der zentralen Rechnereinheit zumindest zeitweilig kommunizieren zu können.

Aus der amerikanischen Veröffentlichung US 2001/0037348 A1 ist darüber hinaus ein System zur elektronischen Übertragung von Informationsdaten bekannt, bei dem Printmedieninhalte, die von einer Anzahl von Autoren veröffentlicht worden sind, zu einer Anzahl von Nutzern übertragen werden. Dieses System weist eine Datenquelle für die Printmedieninhalte auf, in der die veröffentlichten Printmedieninhalte gespeichert sind. Für jeden Nutzer ist ein individueller Vertragsdatensatz vorgesehen, in dem Selektionsinformationen gespeichert sind. Diese Selektionsinformationen werden genutzt, um die vom Nutzer gewünschten Informationsdaten in Form von Printmedieninhalten auszuwählen. In einer zentralen Rechnereinheit werden die auf ein Endgerät eines Nutzers zu übertragenen Informationsdaten auf der Basis der Selektionsinformationsdaten ausgewählt, zusammengestellt und gespeichert. In einem anschließenden Übertragungsschritt werden diese gespeicherten Printmedieninformationsdaten über ein Übertragungsnetz auf ein dem Nutzer zugeordnetes Endgerät übertragen.

Aufgabe der vorliegenden Erfindung ist es, ausgehend vom bekannten Stand der Technik, ein System zum elektronischen Übertragen und Abrechnen von Informationsdaten sowie ein Verfahren zum elektronischen Übertragen und Abrechnen von Informationsdaten bereitzustellen, welches eine sehr viel flexiblere Handhabung beim Erwerb und bei der Bezahlung kostenpflichtiger Informationsdaten - und hier insbesondere von Video- und Musikdateien, wie sie im Rahmen von PayTV-Systemen angeboten werden - ermöglicht.

Diese Aufgabe wird gelöst durch das System mit den Merkmalen gemäß dem unabhängigen Patentanspruch 1 sowie das Verfahren mit den Merkmalen gemäß dem unabhängigen Patentanspruch 11. Weitere Vorteile, Merkmale, Details, Aspekte und Effekte der Erfindung ergeben sich aus den Unteransprüchen, der Beschreibung sowie den Zeichnungen. Merkmale und Details, die im Zusammehang mit dem erfindungsgemäßen System beschrieben sind, gelten dabei selbstverständlich auch im Zusammenhang mit dem erfindungsgemäßen Verfahren, und umgekehrt.

Erfindungswesentlich bezüglich des Systems ist dabei, dass das System ein den breitbandigen Übertragungskanal beinhaltendes hybrides Übertragungsnetz mit einem zusätzlichen digitalen Mobilfunkdatenkanal zur Kommunikation des Nutzers eines Mobilfunkendgerätes mit einem Mobilfunknetzbetreiber und eine das Übertragungsnetz steuernde zentrale Rechnereinheit aufweist, und dass das Endgerät zum Empfang der übermittelten Informationsdaten ein Cl (Common Interface)- Modul beinhaltet, welches in Abhängigkeit von über den digitalen Mobilfunkdatenkanal vom Nutzer erworbener Rechte an Informationsdaten über ein im Endgerät enthaltenes Rechnermodul die spezifischen erworbenen Informationsdaten aus allen über den breitbandigen Übertragungskanal gesandten Informationsdaten filtert und mittels eines Ausgabebausteines zur Ansicht bereitstellt.

Die technische Lehre des Verfahrens sieht vor, dass der Abnehmer mittels eines Mobilfunkendgerätes über einen zusätzlichen Mobilfunkkanal, welcher neben dem Übertragungskanal Bestandteil eines zum System gehörigen hybriden Übertragungsnetzes ist, mit einem Mobilfunknetzbetreiber zur Anmeldung für die Nutzung spezifischer Informationsdaten kommuniziert, die Nutzerdaten mittels einer zum System gehörigen zentralen Rechnereinheit zur Steuerung des Übertragungsnetzes verifiziert werden und dass das Endgerät zum Empfang der übermittelten Informationsdaten mittels eines zum Endgerät gehörenden CI (common Interface) Moduls in Abhängigkeit von über den digitalen Mobilfunkdatenkanal vom Nutzer angemeldeter und verifizierter Rechte an Informationsdaten über ein im Endgerät enthaltenes Rechnermodul die spezifischen erworbenen Informationsdaten aus allen über den Übertragungskanal gesandten Informationdaten filtert und mittels eines Ausgabebausteins zur Ansicht bereitstellt.

Bei den übertragenen Informationsdaten kann es sich beispielsweise um Textdaten und/oder Audiodaten und/oder Videodaten und/oder Bilddaten handeln. Insbesondere kann es sich bei den Informationsdaten beispielsweise um TV-Daten und/oder Musikdaten und/oder Daten bezüglich Printmedieninhalten handeln.

Durch die Kombination der geschilderten erfindungswesentlichen Merkmale des Systems und des Verfahrens ist es im Gegensatz zu herkömmlichen Pay-TV-Systemen nunmehr möglich, dass der potentielle Nutzer über eine mobile Anbindung dem Informationsdaten-Operator oder einem zwischengeschalteten Vermittlungs- und Abrechnungsdienst gezielt und kurzfristig Wünsche übermittelt, die die Benutzung bestimmter Informationsdaten-Angebote betreffen und über die bestehende Mobilfunkverbindung durch Übermittlung entsprechender Identifizierungsdaten, wie beispielsweise dem MSISDN Code (mobile subscriber ISDN Number), eine eindeutige Zuordnung des aufzuwendenden Nutzungsentgeltes zu seinem Informationsdaten-Konto zu ermöglichen. Ein Abonnement bei einem Informationsdaten-Anbieter, wie bislang üblich, ist durch das neuartige System und Verfahren unnötig, vielmehr kann auf eine neue und flexible Art und Weise die Kommunikation zwischen Informationsdaten-Anbieter und Informationsdaten-Nutzer erfolgen.

Darüber hinaus wird der Nutzer durch das System und das Verfahren in die Lage versetzt, lediglich mit Hilfe eines oftmals bereits vorhandenen Mobilfunkendgerätes, beispielsweise einem Handy oder dergleichen, und einer so genannten Set-Top-Box mit entsprechender Standardschnittstelle die so genannte Dienstleistung "subcription on demand" zu nutzen. Diese Dienstleistung wird insbesondere durch die Konvergenz von Mobilfunk und digitaler breitbandiger Übertragung von Informationsdaten über einen Broadcast Canal ermöglicht. Die als Digitalempfänger eingesetzte Set-Top-Box kann hierbei zum Empfang von Informationsdaten, beispielsweise von digitalen Musik- und Videodaten, nach DVB- (digital video broadcasting) Standard über terrestrische (DVB-T und DVB-H), satellitengestützte (DVB-S), oder kabelgebundene (DVB-C) Übertragungswege ausgebildet sein. Bei DVB-H handelt es sich um eine Abwandluntg des DVB-T Standards, der für mobile Endeinrichtungen optimiert wurde. Das "H" steht dabei für den Begriff "Handeld". Vorteilhaft kann der wenigstens eine Vorwärtskanal als Broadcast-Kanal, insbesondere als Kanal für terrestrischen Broadcast (DVB-T und DVB-H), ausgebildet sein.

Dabei ist die Erfindung nicht auf bestimmte Ausführungsformen für den Vorwärtskanal beschränkt. Vorteilhaft handelt es sich bei den Vorwärtskanal um einen solchen Kanal, mit dem eine breitbandige Übertragung von Inhalten möglich ist. Auf diese Weise wird eine kosteneffiziente Verteilung von Informationsdaten über sehr große räumliche Bereiche möglich. Vorteilhaft kann es sich bei dem Vorwärtskanal um einen Broadcast-Kanal für digitalen Rundfunk handeln. Der digitale Rundfunkkanal bzw. das darin implementierte digitale Runkfunknetz übernimmt dabei die effiziente Datenverteilung. Beispiele für vorteilhafte Typen von Vorwärtskanälen sind DVB-T,DVB-H/DAB-Kanäle, Kanäle für terrestrischen Rundfunk, Kanäle für terrestrisches Digitalfernsehen und dergleichen.

Vorzugsweise kann der wenigstens eine Vorwärtskanal als unidirektionaler Kanal ausgebildet sein. Natürlich ist es auch denkbar, daß der Vorwärtskanal als bidirektionaler Kanal ausgebildet ist.

Darüber hinaus ist die Erfindung nicht auf eine bestimmte Anzahl von Vorwärtskanälen und/oder Interaktionskanälen beschränkt.

Besonders vorteilhaft ist es, wenn das hybride Übertragungsnetz aus einem Vorwärtskanal für digitalen Rundfunk und wenigstens einem Interaktionskanal gebildet ist, der auf einem Telekommunikationsnetz - insbesondere auf einem Mobilfunknetz - basiert. Auf diese Weise verfügt das hybride Übertragungsnetz über allgegenwärtige Teilnetze, so daß das erfindungsgemäße System bzw. das erfindungsgemäße Verfahren ohne räumliche Beschränkungen einsetzbar bzw. anwendbar ist.

Insbesondere die Verbreitung von Informationsdaten über einen terrestrischen Broadcast Kanal (DVB-T, DVB-H) bietet dabei die Möglichkeit, auch tragbare und mobile Endgeräte neben den üblichen stationären Endgeräten zu nutzen. Stationäre Endgeräte sind beispielsweise Digitalempfänger in Verbindung mit TV-Geräten als Ausgabebausteine der empfangenen Dateninformation, wobei man hier unterscheiden kann zwischen externen Gerätekombinationen, bei denen TV-Gerät und Digitalempfänger getrennte Bausteine sind und so genannten integrierten Lösungen, bei denen Endgerät und Ausgabebaustein als TV-Gerät mit integriertem Digitalempfänger zum Empfang der digitalen Musik- und Videodaten nach DVB-Standard ausgebildet sind.

Die Kombination zwischen Endgerät und Ausgabegerät bietet sich natürlich auch insbesondere bei solchen Lösungen an, bei denen die Endgeräte als mobile Computer wie Laptops, WebPads, Tablet PC's oder Organizer/ PDA's ausgebildet sind. In diesem Falle sollte der Digitalempfänger zur Entschlüsselung der über den Übertragungskanal übermittelten Informationsdaten in den genannten Geräten enthalten sein. Selbstverständlich ist die Aufzählung der genannten mobilen Endgeräte auch auf Mobiltelefone oder Kraftfahrzeugeinbaugeräte ausdehnbar.

Darüber hinaus kann das erfindungsgemäße System sowie das Verfahren in seiner Handhabung dadurch weiterentwickelt werden, dass zum einen das Endgerät eine Kommunikationsschnittstelle zum Mobilfunkendgerät aufweist, wobei diese Kommunikationsschnittstelle als Systemschnittstelle für kurze Reichweiten ausgestaltet werden kann und beispielsweise mittels der Bluetooth-Technologie realisierbar ist.

Eine andere Ausgestaltung kann vorsehen, dass in das Endgerät eine Mobilfunkendgeräteeinheit integriert ist. Der Vorteil der letztgenannten Ausführungsform besteht sicherlich darin, dass hierbei besonders kompakte Funktionseinheiten realisierbar sind, wohingegen bei der so genannten modularen Gerätekonzeption jeder Nutzer ein eigenes, persönliches Endgerät besitzt, mit Hilfe dessen verschiedene andere, auch fremde Digitalempfänger für den Empfang von Informationsdaten freigeschaltet werden können. Dadurch kann eine maximale Flexibilität in Bezug auf die zu empfangenden Informationsdaten hergestellt werden.

Im Rahmen der Entwicklung des erfindungsgemäßen Systems hat es sich ergänzend zu den verschiedenen Merkmalskombinationen der verwendeten Endgeräte als zweckmäßig erwiesen, den digitalen Mobilfunkdatenkanal als bidirektionalen Interaktionskanal nach GPRS- (general paket radio service) / GSM / UTMS Standard auszubilden.

Der Vorteil des genannten GPRS-Standards besteht darin, dass gegenüber der klassischen Datenübertragung mittels GSM-Standard im Mobilfunkbereich die Paketausrichtung des GPRS-Standard ist. Es sind in Folge dieser Ausrichtung keine zeitintensiven Verbindungsaufbauten notwendig, woraus sich eine effektivere Nutzung des Mobilfunknetzwerkes ergibt. Das erfindungsgemäße System unter Zurhilfenahme des GPRS-Standards sieht dabei vor, dass die das hybride Übertragungsnetz steuernde zentrale Rechnereinheit einen ESG- (electronic service guide) Baustein beinhaltet, von dem aus auf das Mobilfunkendgerät zugegriffen werden kann. Darüber hinaus ist die Rechnereinheit mit einem Pay-TV-application-server mit angeschlossener Teilnehmerdatenbank versehen, mit dem die MSISDN (mobile subscriber ISDN number) des Mobilfunkendgerätenutzers seiner smart card ID zur Nutzung der kostenpflichtigen Informationsdaten zugeordnet werden kann.

Die Schnittstellen zwischen hybridem Übertragungsnetz und dem Mobilfunknetz nach GPRS-Standard können dabei im Rahmen der zentralen Rechnereinheit unterschiedlich ausgebildet sein. Nachfolgend werden einige nicht ausschließliche Beispiele für Schnittstellen beschrieben. So kann beispielsweise, mindestens eine IP-Schnittstelle (IP = Internet Protocol) und/oder eine HTTP-Schnittstelle und/oder eine LDAP- (lightweight directory excess protocol) Schnittstelle und/oder eine Schnittstelle für Abrechnungsdaten, beispielsweise eine M3P-Schnittstelle, vorhanden sein. Mit Hilfe dieser Schnittstellen lassen sich unterschiedliche Identifizierungsdaten der beteiligten Mobilfunkendgerätenutzer überprüfen und verifizieren. Bei den vorstehend beschriebenen Schnittstellen handelt es sich lediglich um beispielhafte Iplementierungen. Es ist jedoch selbstverständlich, dass das prinzipielle Funktionsschema auch unter Verwendung anderer Schnittstellen funktioniert.

Darüber hinaus kann auch ein Verschlüsselungssystem zum Verschlüsseln und Entschlüsseln von Daten und Inhalten vorgesehen sein. Auch diesbezüglich ist die vorliegende Erfindung nicht auf bestimte Ausgestaltungsformen und -typen beschränkt.

Das Zusammenspiel der beiden Kanäle wird von einer zentralen Rechnereinheit, beispielsweise einer Servereinrichtung, gesteuert. Gesteuert wird die Verschlüsselung der Inhalte über den Broadcastkanal und die Entschlüsselung über den Interaktionskanal. Über den Interaktionskanal wird der Kunde initial zu dem Dienst angemeldet und registriert. Während der Anmeldedauer kann der Kunde dann auf Anforderung Zugang zu Medieninhalten anfordern, die gerade im Broadcast übertragen werden und verschlüsselt sind. Die Anforderung des Kunden kann durch ein vorausgehendes "Triggerevent" stimuliert werden. Dies kann über den Broadcast- oder auch Interaktionskanal empfangen werden, und eine Vorabinformation zu dem Angebot geben, zum Beispiel in Form eines Programmführers oder Trailers/Teasers/ Kurzfilms. Dies kann durch den Interaktionskanal auch abhängig von den Interessen und dem Ort des Nutzers personalisiert werden. Der Nutzer kann dann, auf Basis des Triggers oder aufgrund eines eigenen Bedürfnisses, dediziert den Zugang zu Inhaltekomponenenten erhalten, beispielsweise für einen zweistündigen Film am gleichen Abend oder das Programmangebot des gesamten, nächsten Wochenendes, oder nächsten Monats, und dergleichen. Um den angeforderten Zugang zu ermöglichen, wird der Kunde über den Interaktionskanal authentifiziert und gegebenenfalls authorisiert. Die Information, die zum Entschlüsseln der Broadcastinhalte im Endgerät notwendig ist, kann dann über den Interaktionskanal oder Broadcastkanal übertragen werden.

Es kann weiterhin möglich sein, "Gutscheine" für den Bezug von Inhalten auch über den Interaktionskanal an weitere Nutzer weiter zu verschicken. Diese können dann ihrerseits damit Broadcastinhalte entschlüsseln.

Darüber hinaus kann vorgesehen sein, daß die Entschlüsselungsinformation und der Entschlüsselungsmechanismus in der Lage ist, den Zugang mit gewissen Rechten zu verknüpfen. Dies kann die Dauer der Freischaltung sein, etwa für nur einen Film, ein Wochenende, Monat und dergleichen, die Zahl der Nutzungen/ Weiterverwendbarkeit, zum Beispiel einen Film einmal ansehen zu dürfen oder ihn speichern zu dürfen, um ihn später mehrfach anzusehen, oder die Erlaubnis oder das Verbot zur Weiterleitung an andere.

Das modulare Gerätekonzept erlaubt weitere Funktionalitäten. Beispielsweise können verschiedene Broadcast-Endgeräte adressiert werden, beispielsweise auch fremde Geräte im Haus oder Auto eines Freundes, da der Zugangsmechanismus ja im persönlichen Endgerät, beispielsweise einem Mobilfunkgerät, gesteuert wird.

Während der Nutzer den auf Basis seiner Anforderung zugänglichen Inhaltestrom nutzt, kann er über den Interaktionskanal interaktive Dienste nutzen. Diese können, im Falle von Fernsehinhalten, programmbegleitende Informationen bereitstellen, eine Transaktion des Nutzers ermöglichen oder eine Kommunikation über den Inhalt mit anderen Nutzern erlauben. Im letzteren Fall können, wenn der Mobilfunk den Interaktionskanal darstellt, im Mobilfunk implementierte Mechanismen zum Nachrichtenaustausch wie SMS, MMS, Instant Messaging, email und dergleichen benutzt werden.

Im Folgenden wird der schematische Aufbau des erfindungsgemäßen Systems anhand der beigefügten Zeichnungen näher erläutert, wobei gleichzeitig die Abläufe des erfindungsgemäßen Verfahrens aufgezeigt werden. Es zeigt dabei:
- Figur 1a,1a: zwei mögliche Konzeptausprägungen der zum erfindungsgemäßen System gehörenden Endgeräte, und
- Figur 2: den schematischen Aufbau des aus einem hybriden Übrtragungsnetz mit angeschlossenen Mobilfunknetz bestehenden erfindungsgemäßen Systems.

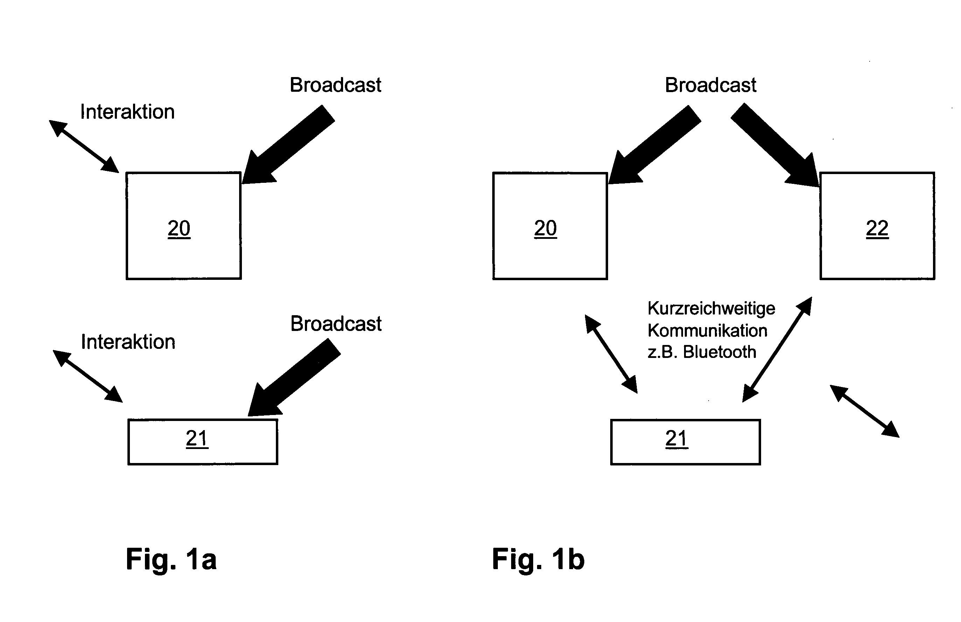

Bei den in Figur 1 a und 1 b dargestellten alternativen Konzepten einer integrierten beziehungsweise einer modularen Endgerätelösung wird deutlich, dass die Darstellung der Figur 1a des integrierten Endgerätekonzeptes alle Komponenten auf Seiten des Nutzers der kostenpflichtigen Informationsdaten in einer kompakten Einheit integriert sind. Sowohl das Ausgabegerät als auch der zugehörige Digitalempfänger sowie gegebenenfalls das Mobilfunkendgerät sind hier in einem Baustein zusammengefasst. Dieser Baustein kann sowohl eine stationäre Anlage 20 in Form eines TV-Gerätes sein als auch eine mobile Endgerätekonfiguration 21 in Form eines Mobilfunkterminals, welches sowohl den Digitalempfänger mit zugehöriger Rechnereinheit und Möglichkeiten der Decodierung der über den Übertragungskanal empfangenen Informationsdaten enthält als auch Möglichkeiten der interaktiven Kommunikation mit dem Mobilfunkbetreiber zur Freischaltung und Abrechnung gewünschter Informationsdaten.

Bei der in der Figur 1 b dargestellten Gerätekonfiguration kommuniziert das Mobilfunkendgerät 21 entweder mit dem stationären Endgerät 20 in Form einer Kombination eines Ausgabegerätes in Form eines TV-Bildschirmes oder einer entsprechenden Musikanlage oder mit einem mobilen Endgerät 22, wie beispielsweise einem Laptop, einem Organizer oder dergleichen.

Der Vorteil der letzteren Ausprägung besteht darin, dass jeder Nutzer ein eigenes, persönliches Endgerät besitzen kann, welches verschiedene, andere, auch fremde Geräte, die den Broadcast empfangen, freischalten kann. Dadurch kann eine maximale Flexibilität im Bezug der Inhalte erreicht werden.

Beide Konzeptvarianten haben wie oben geschildert ihre Vorzüge und können als Endgeräte des erfindungsgemäßen Systems je nach Wunsch des Nutzers zum Einsatz kommen.

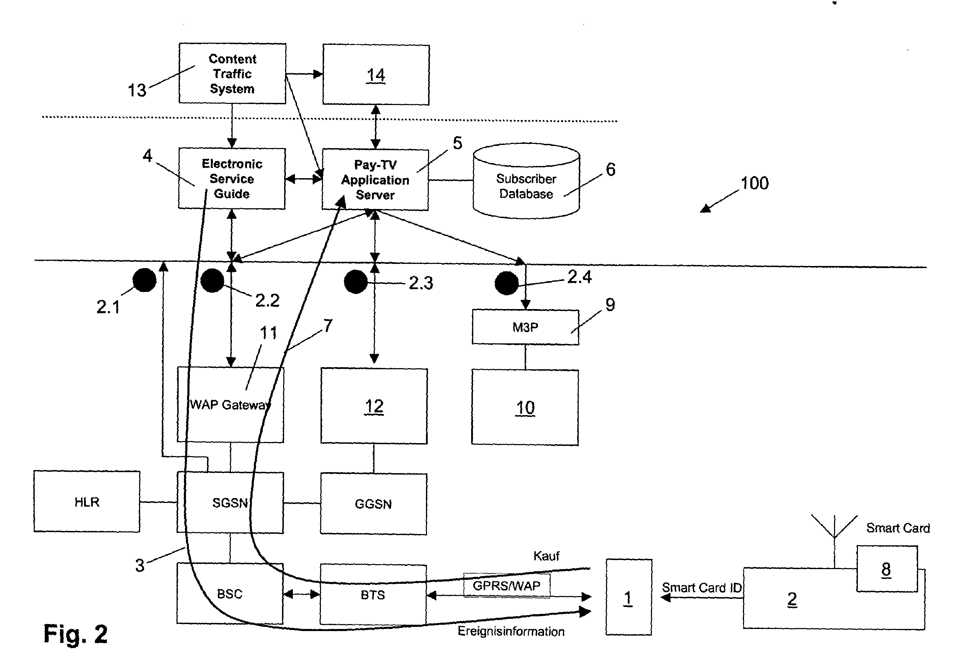

In der Figur 2 sind wesentliche Bestandteile des Systems 100 zur elektronischen Übertragung und Abrechnung von kostenpflichtigen Informationsdaten anhand einer schematischen so genannten Black-Box-Darstellung wiedergegeben. Das Gesamtsystem 100 besteht prinzipiell aus einem hybriden Übertragungsnetz sowie den beim Nutzer vorhandenen Endgeräten. Das hybride Übertragungsnetz besteht dabei zum einen aus verschiedenen Komponenten zur Übertragung von Informationsdaten mittels eines digitalen breitbandigen Übertragungskanals und andererseits aus Komponenten eines digitalen Mobilfunkdatenkanals zur Abwicklung der zugehörigen organisatorischen Abläufe. Hierbei kann es sich unter anderem um die in Figur 2 generell dargestellten Komponenten BTS (Base Transceiver Station), BSC (Base Station Controller), GGSN (Gateway GPRS Support Node), SGSN (Service GPRS Support Node) und HLR (Home Location Register) handeln.

Als Endgeräte sind in der Darstellung der Figur 2 beispielhaft ein Mobilfunkendgerät 1 in Form eines Handys, in der Figur als Mobile Terminal bezeichnet, als auch als so genannte Blackbox eine DVB-Set-Top-Box 2 mit eingebautem CI-Modul (Common Interface) dargestellt. Zum Betrieb des Systems kann vorgesehen sein, dass in der Set-Top-Box 2 eine nutzerbezogene Smart Card 8 implementiert ist. Über das Mobilfunkendgerät 1 kann entsprechend der Darstellung des Pfeiles 7 vom Nutzer mit einem Pay-TV-Application-Server 5, an welchen eine Teilnehmerdatenbank 6 (subscriber data base) angeschlossen ist, Verbindung aufgenommen werden, wobei der Pay-TV-Application-Server 5 Bestandteil der das hybride Übertragungsnetz steuernden zentralen Rechnereinheit ist. Zusätzlich besitzt die zentrale Rechnereinheit einen Electronic Service Guide (ESG) Baustein 4. Dieser ESG-Baustein 4 kommuniziert mit einem System 13 bezüglich der Verteilung der Inhalte, das sogenannte Content Traffic System. Die Frage des Zugangs eines Nutzers zu den Inhalten wird generell über einen entsprechenden Server 14 geregelt, im vorliegenden Beispiel einen sogenannten "Conditional Access Rights Server".

Zwischen beiden Komponenten der Rechnereinheit, dem Electronic Service Guide Baustein 4 und dem PayTV-Application-Server 5 findet mittels eines interaktiven Mobilfunkdatenkanals eine Kommunikation mit dem Nutzer des Mobilfunkendgerätes 1 statt. Die bidirektionale Kommunikation ist mittels der Pfeile 3 und 7 verdeutlicht. Über den Mobilfunkdatenkanal kann sich der Kunde für eine Nutzung von Informationsdaten, die über einen digitalen breitbandigen Übertragungskanal entsprechend dem DVB-Standard ausgestrahlt werden, anmelden. Mit der Anmeldung erfolgt eine Registrierung individueller Nutzerdaten, die auf verschiedene Art und Weise an den Pay-TV-Application-Server 5 übermittelt werden können. In Abhängigkeit der übermittelten Nutzerdaten sind in der zentralen Rechnereinheit verschiedene Schnittstellen zur Überprüfung und Verifizierung vorhanden.

Im Allgemeinen werden mobile Anmeldungen über eine geeignete Schnittstelle, im vorliegenden Beispiel eine IP-Schnittstelle 2.1 (Internet Protocol), an die Rechnereinheit des hybriden Übertragungsnetzes übermittelt. Der Pay-TV-Application-Server 5 ordnet dann die Identität des Teilnehmers anhand seiner MSISDN einer in der Teilnehmerdatenbank 6 vorhandenen Smart Card ID zu. In der Teilnehmerdatenbank 6 ist die für jeden Mobilfunkendgerätenutzer eindeutige MSISDN mit einer gegebenenfalls vorhandenden Smart Card ID gekoppelt und kann somit entsprechend zugeordnet werden. Sobald die Anfrage zur Nutzung des Pay-TV-Angebotes vom Mobildfunkendgerät 1 über den Mobilfunkdatenkanal beim PayTV-Application-Server 5 eingeht, prüft dieser ein entsprechendes Guthaben des Nutzers unter Nutzung der Schnittstelle 2.4. Die Schnittstelle 2.4 ist eine Schnittstelle 9 für Abrechnungsdaten, beispielsweise eine M3P-Schnittstelle, und hat zwei Grundfunktionen: die Prüfung eines Nutzerguthabens und die Verbuchung entsprechend den vom Nutzer gewünschten Informationsdaten. Über die Schnittstelle 2.4 wird zumindest zeitweilig eine Verbindung zu einem Kundeninformation- und Abrechnungssystem 10 hergestellt. Über die Schnittstelle 2.4 kann somit entsprechend dem Guthaben des Mobilfunkentgerätenutzers der Zugang zu Informationsdaten zum Beispiel für einen zweistündigen Film oder das Programmangebot eines gesamten Wochenendes oder des nächsten Monats im zugehörigen PTV-Programm autorisiert werden.

Ist eine derartige Autorisierung erfolgt, so kann über den ESG-Baustein 4 sowohl die Freischaltung der Informationsdaten, das heißt die notwendige Information zur Entschlüsselung der über den Übertragungskanal ausgestrahlten Informationsdaten vorgenommen werden als auch der Zugang zu weiter gehenden Informationsdaten ermöglicht werden. Diese können beispielsweise programmbegleitende Hintergrundinformationen (Ereignisinformation) sein. Diese Informationen können dem Nutzer durch im Mobilfunknetz implementierte Mechanismen wie beispielsweise SMS, MMS, instant messaging, E-mail oder dergleichen zur Verfügung gestellt werden.

Sollten die mittels des Mobilfunkendgerätes 1 übermittelten Daten via WAP und WML beim Pay-TV-Application-Server 5 eintreffen, so werden diese über eine entsprechende Schnittstelle 2.2 durch den im Mobilfunknetz vorhandenen WAP Gateway 11 verifiziert. Die Verbindung zur Indentität des Teilnehmers kann dabei direkt vorgenommen werden, ohne dass weitere Zwischenstufen zur Identitätsbestimmung notwendig sind.

Zur Prüfung der Identität eines Mobilfunkendgerätenutzers, der nur die IP-Quelladresse zusammen mit seiner Anfrage übermittelt, wird eine zusätzlich vorhandene Schnittstelle 2.3, beispielsweise eine LDAP-Schnittstelle, benutzt. Dabei wird eine LDAP-Anfrage (light weight directory excess protocol) an einen entsprechenden Server 12 zur Authentifizierung, Authorisierung und Buchung übermittelt. Aus dem Ergebnis der Anfrage lässt sich die Teilnehmer MSISDN ermitteln und über die Schnittstelle 2.4 die Bezahlung für die gewünschten Informationsdaten realisieren.

Nachdem mit Hilfe der verschiedenen Schnittstellen eine Identifizierung des Mobilfunkendgerätenutzers und die Zuordnung zu einem vorhandenen Guthaben vorgenommen worden ist, können mit Hilfe des ESG-Bausteines 4 Zusatzinformationen an den Nutzer übermittelt werden. Gleichzeitig wird an einen Server 14 des zugehörigen PayTV-Anbieters eine Information übermittelt, die über hier nicht näher dargestellte übliche Schaltstellen eine Freischaltung der Informationsdaten über den zum System gehörigen digitalen breitbandigen Übertragungskanal ermöglicht. Gleichzeitig erfolgt über die Schnittstelle 2.4 eine Abrechnung der gelieferten Informationsdaten.

Natürlich ist es in diesem Zusammenhang jederzeit möglich, sowohl die Dauer der Freischaltung, zum Beispiel für einen Film, eine Wochenendnutzung oder einen Monatszeitraum als auch die Anzahl der Nutzungen beziehungsweise die Weiterverwendbarkeit beispielsweise zur Speicherung der Informationsdaten zu steuern, wobei natürlich auch ein Verbot zur Weiterleitung an andere implementiert werden kann. Sofern die Freischaltung der Informationsdaten allein über das Mobilfunkendgerät eines Nutzers vorgenommen wird, besteht diesbezüglich natürlich die Möglichkeit, mehrere Geräte in einem Hausstand freizuschalten oder gegebenenfalls im Rahmen eines Gutscheins auch Geräte von Freunden und Bekannten zu adressieren.

Natürlich ist es auch mögllich, nach einer Autorisierung eines Mobilfunkendgerätenutzers die Information zum Entschlüsseln der über den Übertragungskanal verbreiteten Informationsdaten sowohl über das Mobilfunknetz als auch über den Übertragungskanal zu übermitteln. Eine Übermittlung via Mobilfunkdatenkanal setzt natürlich voraus, dass zwischen Mobilfunkentgerät und dem Endgerät zum Empfang der Video- oder Musikdaten eine entsprechende Verbindung, beispielsweise über eine Bluetooth Schnittstelle, gegeben ist.

## Patentansprüche

1. System zur elektronischen Übertragung und Abrechnung von kostenpflichtigen Informationsdaten, bei dem die Informationsdaten mittels eines zum System gehörigen digitalen, breitbandigen Übertragungskanals (Broadcast Kanal) vom Anbieter zum Endgerät eines Abnehmers übertragen werden, **dadurch gekennzeichnet, dass** das System ein den Übertragungskanal beinhaltendes hybrides Übertragungsnetz mit einem zusätzlichen digitalen Mobilfunkdatenkanal (3, 7) zur Kommunikation des Nutzers eines Mobilfunkendgerätes (1) mit einem Mobilfunknetzbetreiber und eine das Übertragungsnetz steuernde zentrale Rechnereinheit (4, 5, 6) aufweist und dass das Endgerät (2) zum Empfang der übermittelten Informationsdaten ein Cl (common Interface) Modul beinhaltet, welches in Abhängigkeit von über den digitalen Mobilfunkdatenkanal (3, 7) vom Nutzer erworbener Rechte an Informationsdaten über ein im Endgerät (2) enthaltenes Rechnermodul die spezifischen erworbenen Informationsdaten aus allen über den Übertragungskanal gesandten Informationdaten filtert und mittels eines Ausgabebausteins zur Ansicht bereitstellt.

2. System zur elektronischen Übertragung und Abrechnung von Informationsdaten nach Anspruch 1, **dadurch gekennzeichnet, dass** das Endgerät (2) als Digitalempfänger (Set Top Box) zum Empfang von digitalen Musik- und Videodaten nach DVB (Digital Video Broadcasting) Standard über terrestrische (DVB-T, DVB-H), sattelitengestützte (DVB-S) oder kabelgebundene (DVB-C) Übertragungswege ausgebildet ist.

3. System zur elektronischen Übertragung und Abrechnung von Informationsdaten nach Anspruch 1, **dadurch gekennzeichnet, dass** Endgerät (2) und Ausgabebaustein als TV-Gerät mit integriertem Digitalempfänger zum Empfang von digitalen Musik- und Videodaten nach DVB (Digital Video Broadcasting) Standard über terrestrische (DVB-T, DVB-H), sattelitengestützte (DVB-S) oder kabelgebundene (DVB-C) Übertragungswege ausgebildet ist.

4. System zur elektronischen Übertragung und Abrechnung von Informationsdaten nach Anspruch 1, **dadurch gekennzeichnet, dass** Endgerät (2) und Ausgabebaustein als mobile Empfangs- und Ausgabe-Terminals in Form von Laptops, Webpads, Tablet-PCs, PDAs (Personal Digital Assistants), Mobilfunkendgeräten und Kfz-Einbaugeräten mit integriertem Digitalempfänger zum Empfang von digitalen Musik- und Videodaten nach DVB (Digital Video Broadcasting) Standard über terrestrische (DVB-T, DVB-H), satellitengestützte (DVB-S) oder kabelgebundene (DVB-C) Übertragungswege ausgebildet ist.

5. System zur elektronischen Übertragung und Abrechnung von Informationsdaten nach einem der Ansprüche 1 bis 4, **dadurch gekennzeichnet, dass** das Endgerät (2) eine Kommunikationsschnittstelle zum Mobilfunkendgerät (1) aufweist.

6. System zur elektronischen Übertragung und Abrechnung von Informationsdaten nach Anspruch 5, **dadurch gekennzeichnet, dass** die Kommunikationsschnittstelle als Systemschnittstelle für kurze Reichweiten ausgebildet ist.

7. System zur elektronischen Übertragung und Abrechnung von Informationsdaten nach einem der Ansprüche 1 bis 4, **dadurch gekennzeichnet, dass** in das Endgerät (2) eine Mobilfunkendgeräteeinheit integriert ist.

8. System zur elektronischen Übertragung und Abrechnung von Informationsdaten einem der Ansprüche 1 bis 7, **dadurch gekennzeichnet, dass** der Mobilfunkdatenkanal als bidirektionaler Interaktionskanal nach GPRS (General Packet Radio Service) Standard ausgebildet ist.

9. System zur elektronischen Übertragung und Abrechnung von Informationsdaten nach einem der Ansprüche 1 bis 8, **dadurch gekennzeichnet, dass** die das Übertragungsnetz steuernde zentrale Rechnereinheit einen ESG (Elektronic Service Guide) Baustein (4), von dem aus auf das Mobilfunkendgerät (1) zugegriffen werden kann und einen Pay-TV Application Server (5) mit angeschlossener Teilnehmer-Datenbank (6) aufweist, mit dem die MSISDN (Mobile Subscriber ISDN Number) des Mobilfunkendgerätenutzers seiner Smart Card ID zum Nutzung kostenpflichtiger Informationsdaten zugeordnet werden kann.

10. System zur elektronischen Übertragung und Abrechnung von Informationsdaten nach einem der Ansprüche 1 bis 9, **dadurch gekennzeichnet, dass** als Schnittstellen zum hybriden Übertragungsnetz die zentrale Rechnereinheit mindestens eine IP-Schnittstelle (2.1) und/oder eine HTTP-Schnittstelle (2.2) und/oder eine LDAP- (Lightweight Directory Access Protocol)-Schnittstelle (2.3) und/oder eine Schnittstelle für Abrechnungsdaten (2.4) aufweist.

11. Verfahren zur elektronischen Übertragung und Abrechnung von Informationsdaten mittels eines Systems, bei dem die Informationsdaten mittels eines digitalen, breitbandigen Übertragungskanals (Broadcast Kanal) vom Anbieter zum Endgerät eines Abnehmers übertragen werden, **dadurch gekennzeichnet, dass** der Abnehmer mittels eines Mobilfunkendgerätes (1) über einen zusätzlichen Mobilfunkkanal (3, 7), welcher neben dem Übertragungskanal Bestandteil eines zum System gehörigen hybriden Übertragungsnetzes ist, mit einem Mobilfunknetzbetreiber zur Anmeldung für die Nutzung spezifischer Informationsdaten kommuniziert, die Nutzerdaten mittels einer zum System gehörigen zentralen Rechnereinheit zur Steuerung des Übertragungsnetzes verifiziert werden und dass das Endgerät (2) zum Empfang der übermittelten Informationsdaten mittels eines zum Endgerät gehörenden CI (common Interface) Moduls in Abhängigkeit von über den digitalen Mobilfunkdatenkanal (3, 7) vom Nutzer angemeldeter und verifizierter Rechte an Informationsdaten über ein im Endgerät (2) enthaltenes Rechnermodul die spezifischen erworbenen Informationsdaten aus allen über den Übertragungskanal gesandten Informationdaten filtert und mittels eines Ausgabebausteins zur Ansicht bereitstellt.

12. Verfahren zur elektronischen Übertragung und Abrechnung von Informationsdaten nach Anspruch 11, **dadurch gekennzeichnet, dass** das Endgerät (2) als Digitalempfänger (Set Top Box) digitale Informationsdaten nach DVB (Digital Video Broadcasting) Standard über terrestrische (DVB-T, DVB-H), sattelitengestützte (DVB-S) oder kabelgebundene (DVB-C) Übertragungswege empfängt.

13. Verfahren zur elektronischen Übertragung und Abrechnung von Informationsdaten nach Anspruch 11, **dadurch gekennzeichnet, dass** Endgerät (2) und Ausgabebaustein als TV-Gerät mit integriertem Digitalempfänger digitale Informationsdaten nach DVB (Digital Video Broadcasting) Standard über terrestrische (DVB-T, DVB-H), sattelitengestützte (DVB-S) oder kabelgebundene (DVB-C) Übertragungswege empfängt und zur Ansicht bereitstellt.

14. Verfahren zur elektronischen Übertragung und Abrechnung von Informationsdaten nach Anspruch 11, **dadurch gekennzeichnet, dass** Endgerät (2) und Ausgabebaustein als mobile Empfangs- und Ausgabe-Terminals in Form von Laptops, Webpads, Tablet-PCs, PDAs (Personal Digital Assistants), Mobilfunkendgeräten und Kfz-Einbaugeräten mit integriertem Digitalempfänger digitale Informationsdaten nach DVB (Digital Video Broadcasting) Standard über terrestrische (DVB-T), satellitengestützte (DVB-S) oder kabelgebundene (DVB-C) Übertragungswege empfangen und zur Ansicht bereitstellen.

15. Verfahren zur elektronischen Übertragung und Abrechnung von Informationsdaten nach einem der Ansprüche 11 bis 14, **dadurch gekennzeichnet, dass** das Endgerät (2) über eine Kommunikationsschnittstelle mit dem Mobilfunkendgerät (1) Daten austauscht.

16. Verfahren zur elektronischen Übertragung und Abrechnung von Informationsdaten nach Anspruch 15, **dadurch gekennzeichnet, dass** die Kommunikationsschnittstelle als Systemschnittstelle für kurze Reichweiten gemäß dem Bluetoothstandard arbeitet.

17. Verfahren zur elektronischen Übertragung und Abrechnung von Informationsdaten nach Anspruch 11, **dadurch gekennzeichnet, dass** der Mobilfunkdatenkanal als bidirektionaler Interaktionskanal nach GPRS (General Packet Radio Service) Standard arbeitet.

18. Verfahren zur elektronischen Übertragung und Abrechnung von Informationsdaten nach einem der Ansprüche 11 bis 17, **dadurch gekennzeichnet, dass** die das Übertragungsnetz steuernde zentrale Rechnereinheit mittels eines ESG (Elektronic Service Guide) Baustein (4) auf das Mobilfunkendgerät (1) des Abnehmers der Informationsdaten zugreifen kann und dass ein Pay-TV Application Server (5) mit angeschlossener Teilnehmer-Datenbank (6) als Bestandteil der zentralen Rechnereinheit eine Zuordnung der MSISDN (Mobile Subscriber ISDN Number) des Mobilfunkendgerätenutzers zu seiner Smart Card ID zum Nutzung kostenpflichtiger Informationsdaten vomnehmen kann.

19. Verfahren zur elektronischen Übertragung und Abrechnung von Informationsdaten nach einem der Ansprüche 11 bis 18, **dadurch gekennzeichnet, dass** als Schnittstellen zum hybriden Übertragungsnetz die zentrale Rechnereinheit mit mindestens einer IP-Schnittstelle (2.1) und/oder einer HTTP-Schnittstelle (2.2) und/oder einer LDAP-(Lightweight Directory Access Protocol)-Schnittstelle (2.3) und/oder einer Schnittstelle für Abrechnungsdaten (2.4) arbeitet.
